# EUROPÄISCHE PATENTSCHRIFT

(11) **EP 2 851 182 B1**
(45) Veröffentlichungstag und Bekanntmachung des Hinweises auf die Patenterteilung: **03.01.2018**
(21) Anmeldenummer: 14163589.6
(22) Anmeldetag: 04.04.2014
(51) Int. Cl.: B29B 15/12, C08G 59/50

(54) **1K-System, daraus herzustellende Erzeugnisse und Verfahren zur Herstellung von Faserverbundhalbzeugen und -bauteilen mit dem 1K-System**
1-component system, products derived from same and method for the production of fibre compound semi-finished products components with the 1-component system
Système mono-composant, produits à fabriquer à partir de celui-ci et procédé de fabrication de demi-produits et composants en matériau composite renforcé par des fibres doté du système mono-composant

(30) Priorität: 20.09.2013 PL 40540513
(43) Veröffentlichungstag der Anmeldung: 25.03.2015
(73) Patentinhaber: New Era Materials Sp. z o.o., 32-085 Modlniczka (PL); Leichtbau-Zentrum Sachsen GmbH, 01307 Dresden (DE)
(72) Erfinder: Pilawka, Ryszard, 70-361 Szczecin (PL); Jarkowski, Maciej, 72-003 Bezrzecze (PL); Hufenbach, Werner, 01324 Dresden (DE); Lepper, Martin, 01279 Dresden (DE); Renner, Ole, 01099 Dresden (DE); Czulak, Andrzej, 32-087 Zielonki (PL); Geller, Sirko, 01277 Dresden (DE)
(74) Vertreter: Kailuweit & Uhlemann Patentanwälte Partnerschaft mbB

(56) Entgegenhaltungen:
- EP-A2- 0 397 976
- US-A- 4 459 398
- US-A1- 2002 090 754
- DATABASE CA [Online] CHEMICAL ABSTRACTS SERVICE, COLUMBUS, OHIO, US; 18. April 1996 (1996-04-18), SATO, SHOICHI ET AL: "Epoxy resin compositions containing latent hardeners and whiskers, and prepregs with good tack and pliability from them", XP002734544, gefunden im STN Database accession no. 1996:226040 -& JP H08 20708 A (MITSUBISHI CHEM CORP) 23. Januar 1996 (1996-01-23)

## Beschreibung

Die Erfindung betrifft ein 1K-System und Verfahren zur Herstellung von Halbzeugen (Prepregs) und Bauteilen mit dem 1K-System.

Prepregs sind Halbzeuge zur Verarbeitung zu diversen räumlichen Bauteilen, die in verschiedenen Industriezweigen, wie beispielsweise beim Flugzeugbau, Anwendung finden.

Herkömmliche duroplastische Prepregs bestehen aus Endlosfasern und einer ungehärteten duroplastischen Kunststoffmatrix und finden vorrangig im Leichtbau Anwendung. Die Endlosfasern bilden eine Bewehrungsschicht und werden in Form von Geweben, Gelegen oder unidirektional angeordneten Fasern in das Prepreg eingebracht. Hierbei kommen beispielsweise Glas-, Kohlenstoff-, Basalt- oder Aramidfasern zum Einsatz. Durch ihre ausgeprägte plastische Verformbarkeit können die Prepregs tafel- oder bahnenförmig (auf Rollen) gelagert und ausgeliefert werden. Um eine vorzeitige Reaktion des Harzes mit dem Härter zu verhindern, müssen die Prepregs nachteilig gekühlt gelagert werden. Nur so kann eine Lagerung über längere Zeiträume ermöglicht werden. Bereits bei Raumtemperatur kommt es nachteilig zur vorzeitigen Aushärtung der Prepregs, wodurch eine Formgebung erschwert oder unmöglich wird.

Als ungehärtete duroplastische Kunststoffmatrix, mit der die Endlosfasern imprägniert sind, wird meist eine Epoxidharzzusammensetzung, bestehend aus einem Harz, einem Härter und optional einem Beschleuniger, verwendet. Diese Matrix umhüllt und tränkt (imprägnieren) die Bewehrungsschicht zugleich.

Zur Herstellung der räumlichen Bauteile werden herkömmliche Prepregs zunächst in die gewünschte Form gebracht und anschließend bei einer bestimmten Temperatur ausgehärtet. Dabei kommt es zur Vernetzung der duroplastischen Kunststoffmatrix und damit zur Härtung und Verstärkung des Prepregs.

Die US 2006/035088 A offenbart beispielsweise eine Zusammensetzung zur Vorimprägnierung einer Bewehrungsschicht, bei der exakt festgelegte Mengen von Harzen, schwefelhaltigen Aminverbindungen, Harnstoff- und Dicyandiamidverbindungen als latente Härter in festgelegter Reihenfolge vermengt werden. Mit dieser Zusammensetzung werden die als Gewebe oder Faserbänder vorliegenden Kohlenstofffasern vorimprägniert. Unter erhöhtem Druck und erhöhter Temperatur können daraus schließlich Endprodukte hergestellt werden.

Die CN 1027 02683 A offenbart eine Zusammensetzung aus einem Epoxidharz und Kolophonium zur Herstellung von Prepregs. Eine Bewehrungsschicht wird mit der genannten Zusammensetzung getränkt, in Pressen mittels Druckeinwirkung bzw. durch Erwärmung in Autoklaven und anschließender Abkühlung zu einem Prepreg verarbeitet. Die so vorimprägnierten Prepregs können etwa einen Monat lang bei Raumtemperatur gelagert werden. Nach der Formgebung können die Prepregs durch Erwärmung auf 125 °C ausgehärtet werden, wobei das Kolophonium zum Vernetzungsmittel wird. Nachteilig ist hier die verhältnismäßig kurze Lagerungszeit von nur einem Monat.

Die JP H0820708 A offenbart ein Verfahren zur Herstellung von Pregreps, die mit einer Zusammensetzung aus einem flüssigen Epoxidharz und einem mikroverkapselten Aminaddukt als Vernetzungsmittel vorimprägniert werden. Die Aushärtung der Prepregs erfolgt bei Temperaturen über 80°C durch die Freisetzung des Vernetzers. Auch in der US 4,459,398 A wird ein flüssiges Harz verwendet.

Die JP H11171980 A offenbart eine Zusammensetzung aus einem Epoxidharz, einem Vernetzer, ausgewählt aus Polyamin, Polyphenol oder Säureanhydrid und einer Phosphor- und Borhaitigen organischen Verbindung, die als Lösung formuliert ist. Damit getränkte Prepregs sind gut formbar und bei Raumtemperatur lagerstabiler.

Die US 2002/090754 A1 offenbart ein verbundenes Bauteil und eine Z-Verbindungsmethode für Fine-Pitch Substrate, sowie ein Polymer, welches bevorzugt ein Epoxidharz, bestehend aus Bisphenol aus Epichlorhydrin und Bisphenol A, ist. Als Härter werden beispielsweise Imidazol und Imidazolderivate verwendet.

EP 0 397 976 A2 offenbart ein Verfahren zur kontinuierlichen Herstellung von Verbundwerkstoffen, insbesondere Leiterplatten auf der Basis von Epoxidharz-Laminaten in einer Doppelbandpresse. Die Pepregs sind mit Bindemittel, bestehend aus einem Epoxidharz, einem Novolak auf der Basis von Bisphenol und einem Imidazol, getränkt.

Die Aufgabe der Erfindung ist es, ein 1K- System und ein Verfahren zur Herstellung von mit diesem 1K- System hergestellten Faserverbundbauteilen oder Halbzeugen sowie damit hergestellte Faserverbundbauteile anzugeben. Dabei sollen die Halbzeuge bei Raumtemperatur lange Zeit zu lagern sein, ohne dass diese vorzeitig aushärten und damit merklich an Plastizität verlieren.

Erfindungsgemäß wird die Aufgabe durch ein Faserverbundbauteil gemäß Anspruch 1 und 1K- System gemäß dem nebengeordneten Anspruch 13 gelöst.

Erfindungsgemäß bezeichnen 1K-Systeme (1-Komponenten-Systeme) Zusammensetzungen, die alle für eine Härtungsreaktion relevanten Bestandteile in nur einer Komponente enthalten. Dies kann auch als Kompositum bezeichnet werden. Dabei handelt es sich bei den Bestandteilen um ein Monomer und einen latenten Härter. Unter Monomer sind reaktive Verbindungen zu verstehen, die mit dem latenten Härter unter bestimmten Bedingungen, wie beispielsweise erhöhter Temperatur, eine chemische Reaktion, auch Härtungsreaktion genannt, eingehen. Dabei entsteht ein vernetztes Polymer.

Vorteilhaft entfällt bei 1K-Systemen ein aufwändiges, eventuell mit Fehlern behaftetes Mischen einzelner Bestandteile, um eine Härtungsreaktion auszulösen.

Das Epoxidharz ist das Monomer im 1K-System, welches oligomere Verbindungen mit Epoxidgruppen umfasst. Oligomere sind Verbindungen, die aus mehreren strukturell gleichen oder ähnlichen Bauteilen aufgebaut sind. Ausgehärtete Epoxidharze bilden vernetzte Polymere, sogenannte duroplastische Kunststoffe. Vorteilhaft besitzen duroplatische Kunststoffe eine hohe Festigkeit und chemische Beständigkeit, eine geringe Feuchtigkeitsempfindlichkeit sowie eine geringe Wasserdampfdurchlässigkeit.

Erfindungsgemäß bezeichnet sekundäres Amin ein Amin, welches zweifach substituiert ist.

Erfindungsgemäß ist das sekundäre Amin ein Komplex der allgemeinen Formel MeL₄X₂, wobei L für einen Liganden und X für ein Anion steht. Das Metallkation (Me) ist ausgewählt aus Kupfer, Cobalt, Nickel oder Zink. Bevorzugt liegt das Metallkation als zweiwertiges Metallkation (Me(II)) vor. Der Ligand L ist ein Imidazol oder ein Imidazol-Derivat und das Anion X ausgewählt aus Fluorid, Chlorid, Bromid, lodid und/oder Nitrat. Erfindungsgemäß bezeichnet Imidazol-Derivat alle Verbindungen, die die gleiche Grundstruktur wie das Imidazol haben und deren Struktur sich somit aus der Imidazolgrundstruktur ableiten lässt.

Vorteilhaft wird so ein bei Raumtemperatur festes 1K-System geschaffen, dass in Pulverform sehr gut zu verarbeiten ist. Die Schmelztemperatur liegt dabei unter der Vernetzungstemperatur.

Bevorzugt ist das Epoxidharz auf Basis von Bisphenol A. Bevorzugt besteht das Epoxidharz aus Reaktionsprodukten aus der Reaktion von Bisphenol A mit Epichlorhydrin. Bei der Reaktion von Bisphenol A mit Epichlorhydrin können, je nach molarem Verhältnis der beiden Reaktionspartner, Bisphenol-A-bisglycidylether (auch BADGE oder DGEBA genannt) oder/und oligomere Epoxidharze entstehen. Die oligomeren Epoxidharze mit mehr als zwei Bisphenol A-Gruppen im Molekül sind bei Raumtemperatur Feststoffe. Bevorzugt liegt der Feststoff partikulär vor. Partikulär bezeichnet erfindungsgemäß Teilchengrößen ≤ 130 µm.

Bevorzugt weist das handelsübliche Epoxidharz einen Epoxidwert von 0,05 bis 0,56 mol/100 g, besonders bevorzugt von 0,05 bis 0,28 mol/100g auf. Der Epoxidwert gibt an, wie viele Epoxidgruppen in 100 g Epoxidharz enthalten sind.

Bevorzugt weist das für die Herstellung des Faserverbundbauteils gemäß Anspruch 1 verwendete Epoxidharz eine Schmelztemperatur im Bereich von 50 bis 130 °C auf. Schmelztemperatur beschreibt erfindungsgemäß die Temperatur bei der das bei Raumtemperatur feste Epoxidharz verflüssigt wird.
Bevorzugt enthält das 1K-System 86 bis 99 Gew-% des Epoxidharzes, gemessen an der gesamten Masse des 1K-Systems, weiterhin bevorzugt 90 % bis 98 % und besonders bevorzugt 92 % bis 98 %

Bevorzugt enthält das 1K-System 1 bis 14 Gew.-%, des Imidazols oder Imidazol-Derivates, gemessen an der gesamten Masse des 1K-Systems weiterhin bevorzugt 2 bis 10 Gew.-% und besonders bevorzugt 2 bis 8 Gew.-%.

Prinzipiell sind alle Imidazol-Derivate einsetzbar. Bevorzugt ist das Imidazol-Derivat ein Imidazol mit einem Alkylsubstituenten an mindestens einer der Positionen 2, 4 oder 5 des Imidazolmoleküls.
Bevorzugt sind die Alkylsubstituenten ausgewählt aus Methyl, Ethyl, Propyl, Isopropyl, Butyl und/oder tert-Butyl.

Bevorzugt sind die Imidazolderivate ausgewählt aus 2-Methylimidazol (2-MI), 4-Methylimidazol (4-MI), 2-Ethylimidazol (2-EI), 2-Ethyl-4-methyl-lmidazol (2-E-4-MI) und 2-Isopropylimidazol.
Bevorzugt sind die Imidazol-Derivate bei Raumtemperatur fest. Bevorzugt weist das 1K-System eine Vernetzungstemperatur von über 100 °C auf.
Die Vernetzungstemperatur ist die Temperatur, bei der die Härtungsreaktion zwischen Monomer und latentem Härter ausgelöst wird.

Das erfindungsgemäße Faserverbundbauteil oder Halbzeug hat als Matrixwerkstoff das erfindungsgemäße oben beschriebene 1K-System. Als Verstärkungsfasern kommen alle bekannten Fasern in Betracht, insbesondere Kohlenstoff-, Glas-, Aramid-, Natur-, Basalt- und Mischfasern. Die Verstärkungsfasern sind dabei bevorzugt textile Halbzeuge wie Gelege oder Gewebe. Vorteilhaft kann ein erfindungsgemäßes Faserverbundbauteil im Vergleich zu herkömmlichen duroplastischen Faserverbundbauteilen einfach hergestellt werden bei gleichen, sehr guten mechanischen und optischen Eigenschaften. Besonders vorteilhaft sind aus dem erfindungsgemäßen 1K-System hergestellte Halbzeuge für lange Zeit ohne Kühlung stabil, da der Matrixwerkstoff bei Raumtemperatur in fester Form vorliegt. Ein weiterer relevanter Vorteil besteht darin, dass die Halbzeuge durch Erwärmen umformbar sind. So können die Halbzeuge für den Transport günstig eben ausgeführt sein und in einem nachträglichen Umformschritt bis auf ihre Erweichungstemperatur erwärmt und in eine gewünschte Raumform geformt werden. Im Rahmen dieser Umformschritte besteht auch die Möglichkeit Einleger (z.B. metallische Einleger) in die Halbzeuge einzubringen. Wenn nötig sind auch mehrere aufeinanderfolgende Umformungen möglich.

Diese Umformungen werden möglich, da die Schmelztemperatur (der Begriff Schmelztemperatur bezieht sich auf das 1K-System und der Begriff Erweichungstemperatur auf daraus gefertigte Halbzeuge) unter der Vernetzungstemperatur liegt, wodurch das 1K-System als Matrixwerkstoff zu verflüssigen ist, ohne dabei zu vernetzen.

Die erfindungsgemäße Verwendung des oben beschriebenen 1K-Systems als Matrixwerkstoff für ein Faserverbundbauteil ermöglicht vorteilhaft eine sehr einfache Handhabung bei der Herstellung in Verbindung mit hervorragenden Bauteileigenschaften. Es können dabei alle denkbaren Herstellungsverfahren zum Einsatz kommen. Beispielsweise eignet sich das 1K-System auch hervorragend zur Herstellung von imprägnierten Halbzeugen, da es für die Imprägnierung aufgeschmolzen werden kann, jedoch erst bei einer deutlich höheren Temperatur vernetzt. Auch eignet sich das 1K-System für alle Faserarten, insbesondere die oben genannten.

Das erfindungsgemäße Verfahren gemäß Anspruch 9 zur Herstellung imprägnierter Halbzeuge und Bauteile für die Herstellung von duroplastischen Faserverbundbauteilen verwendet das oben beschriebene 1K-System. Prinzipiell wird in einem Schritt a) das pulverförmige 1K-System auf ein textiles Verstärkungsgebilde aufgebracht; in einem Schritt b) das 1K-System durch Temperaturerhöhung aufgeschmolzen; und in einem Schritt c) das imprägnierte Halbzeug nach Abkühlung entnommen sowie anschließend in einem Schritt d) umgeformt oder in einem Schritt e) das imprägnierte und vernetzte Bauteil entnommen.

Das Aufbringen des pulverförmigen 1K-Systems erfolgt dabei beispielsweise mittels einer Sprühpistole oder einem Rüttelsieb. Dabei kann das 1K-System vollflächig auf das Verstärkungsgebilde oder auch nur lokal begrenzt aufgebracht werden. Durch den lokalen Auftrag vereinfacht sich die Aufbringung des pulverförmigen 1K-Systems. Nach dem Schmelzen des Pulvers verteilt sich dieses flächig über der Verstärkungsstruktur.. Ebenso ist es möglich, das pulverförmige 1K-System in eine Werkzeugform einzubringen und anschließend das Verstärkungsgebilde in diese Werkzeugform einzulegen. Verstärkungsgebilde bedeutet hier ein Gebilde aus Verstärkungsfasern, das ein oder mehrlagig sein kann, oder auch eine komplexe Form aufweisen kann.

Als Fasern kommen wie bereits erwähnt alle für die Herstellung von Faserverbundbauteilen bekannten Fasern in Betracht, wie Kohlenstoff-, Glas-, Aramid-, Natur-, Basalt- und Mischfasern. Auch eine Kombination verschiedener textiler Halbzeuge ist möglich.

Auch kann das oben beschriebene Verfahren in mehreren Wiederholungen nacheinander erfolgen, um so komplexere Strukturen herzustellen.

Der Wärmeeintrag für das Aufschmelzen des 1K-Systems in Schritt b) kann sowohl in einer Werkzeugform als auch außerhalb einer Werkzeugform mit anschließendem Transfer in diese erfolgen. Hierbei sind alle gängigen Verfahren zur Wärmeeinbringung möglich, insbesondere elektrische oder induktive Temperierung der Werkzeugform sowie Temperierung mittels Medien (Wasser, Öl). Ebenso kann der Wärmeeintrag außerhalb des Werkzeuges mittels Infrarotstrahlen oder anderer Verfahren zur Wärmeübertragung erfolgen. Der für die Umformung der Halbzeuge in Schritt d) erforderliche Wärmeeintrag kann sowohl auf das ganze Halbzeug als auch auf die Umformzone begrenzt stattfinden. Für die Endvernetzung der umgeformten Halbzeuge ist eine Erhöhung der Temperatur bis zur Vernetzungstemperatur erforderlich. Dies kann sowohl im Umformwerkzeug als auch dem Umformprozess nachgelagert, beispielsweise in einem Temperofen erfolgen

Zur Konsolidierung der mit dem 1K-System imprägnierten Bauteile können verschiedene Verfahren, beispielsweise einseitige Verfahren wie das Autoklav-, das Diaphragma- oder auch das VARI-Verfahren eingesetzt werden. Als beidseitiges Verfahren ist das Pressverfahren einsetzbar. Auch kann dabei Vakuumunterstützung zur Anwendung kommen.

In einer bevorzugten Ausführungsform des erfindungsgemäßen Verfahrens zur Herstellung von Halbzeugen erfolgt die Verfahrensdurchführung kontinuierlich. Hierzu wird das Verstärkungsgebilde vor Durchführung des Schrittes a) auf einem Förderband oder einem Kalander dem Aufbringen des pulverförmigen 1K-Sytems zugeführt. Das Aufbringen des pulverförmigen 1K-Systems auf das Verstärkungsgebilde erfolgt dann auf dem Förderband bzw. dem Kalander, ebenso wie das Erwärmen. Besonders bevorzugt kommen hier berührungslose Möglichkeiten zum Einbringen von Wärme zum Einsatz, wie z.B. durch Infrarotstrahlung. Vorteilhaft können so hocheffizient in einem kontinuierlichen automatisierten Verfahren die duroplastischen Halbzeuge hergestellt werden.

Besonders bevorzugt wird zur Imprägnierung zusätzlich Druck mittels Doppelbandpressen oder Kalandern aufgebracht.

Die Halbzeuge können vorteilhaft auch nach der Imprägnierung noch einmal umgeformt werden, indem sie auf eine Temperatur über der Schmelztemperatur jedoch unterhalb der Vernetzungstemperatur erhitzt werden. Vorteilhaft können die Halbzeuge so in flacher Form gelagert und transportiert werden und anschließend in eine Form gebracht werden, die das Einlegen in ein 3D-Formwerkzeug erleichtert. In einer besonders bevorzugten Ausführungsform erfolgen das Umformen und das abschließende Konsolidieren in einem gemeinsamen Verfahrensschritt.

Es versteht sich, dass die Halbzeuge durch Erwärmen auf eine Temperatur oberhalb der Vernetzungstemperatur konsolidiert werden können.

Natürlich können mittels des 1K-Systems duroplastische Faserverbundbauteile hergestellt werden, ohne den Zwischenschritt des Halbzeuges indem das Bauteil nach dem Aufbringen des pulverförmigen 1K-Systems direkt konsolidiert wird.

Das Herstellungsverfahren von mit dem 1K-System imprägnierten und vorimprägnierten Erzeugnissen, aufweisend eine verstärkende mit dem Kompositum getränkte Faserschicht ist kennzeichnet dadurch, dass die verstärkende Schicht mit dem Kompositum aus reaktiven Epoxidharzen überzogen und anschließend die so vorbereitete Schicht zwischen zwei Schichten eines kontinuierlichen Trennmittels untergebrach wird. Im Anschluss wird die verstärkende Schicht mit dem 1K-System unter erhöhter Temperatur und bei festgelegtem Druck getränkt.

Bevorzugt wird die verstärkende Faserschicht mit dem 1K-System mit einem Gehalt von 90 bis 98 Gewichtsanteilen an festem Epoxidharz getränkt, das mit dem latenten Härter in Form von modifizierten Aminen in einer Menge von 2 bis 10 Gewichtsanteile pro 100 Gewichtsanteile des 1K-Systems vermischt ist.

Weiterhin bevorzugt können die kontinuierlichen Trennschichten aus nicht tränkbaren und nicht adhäsiven Stoffen hergestellt werden. Beispielsweise können hier Folien zum Einsatz kommen.

In einer Ausgestaltung des Verfahrens wird die verstärkende Schicht mit einer Schicht des 1K-Systems mit einer Dichte von 150 bis 170 g/m² überzogen.

In einer weiterhin bevorzugten Ausführungsform des Verfahrens wird die mit einer Schicht des 1K-Systems überzogene verstärkende Schicht bei der Temperatur von 70 bis 170 °C und im Zeitraum von 5 bis 15 Minuten getränkt.

Weiterhin bevorzugt wird die mit einer Schicht des 1K-Systems überzogene und zwischen zwei kontinuierlichen Trennschichten untergebrachte verstärkende Schicht bei der Temperatur von 70 bis 150 °C und im Zeitraum von 5 bis 15 Minuten und unter Druckeinwirkung von 2 bis 5 bar getränkt.

Bevorzugt wird der Druck zum Tränken durch eine Presse aufgebracht.

In einer alternativen Ausgestaltung des Verfahrens wird die mit einer Schicht des 1K-Systems überzogene und zwischen zwei kontinuierlichen Trennschichten untergebrachte verstärkende Schicht unter Druck getränkt, der in den bis auf eine Temperatur von 90 bis 120 °C erwärmten Kalandern erzeugt wird.

Das Wesen der Erfindung bezüglich der Herstellung von mit dem 1K-System vorimprägnierten Produkten, genannt Prepregs oder Halbzeuge, beruht darauf, dass eine verstärkende Faserschicht mit reaktiven Epoxidharzen überzogen, anschließend die mit EP-Harz überzogene verstärkende Schicht zwischen zwei kontinuierlichen Trennschichten untergebracht und die verstärkende Schicht mit dem Kompositum aus reaktiven EP-Harzen unter erhöhter Temperatur und bestimmtem Druck getränkt wird.

Eine wesentliche Eigenschaft des Verfahrens gemäß Erfindung ist es noch, dass die verstärkende Faserschicht mit einem 1K-System mit einem Gehalt von 90 bis 98 Gewichtsanteilen von festem aromatischem Epoxid-Harz getränkt wird, das mit einem latenten Härter in Form von modifizierten Aminen in einer Menge von 2 bis 10 Gewichtsanteile pro 100 Gewichtsanteile des 1K-Systems vermischt wird.

Eine weitere bedeutende Eigenschaft des Verfahrens gemäß Erfindung beruht darauf, dass die bevorzugt eingesetzten kontinuierlichen Trennschichten aus nicht tränkbarem und nicht adhäsivem Stoff hergestellt werden. Beispiele

Eine weitere bedeutende Eigenschaft des Verfahrens gemäß Erfindung ist die Tatsache, dass die verstärkende Schicht mit einer Schicht aus dem 1K-System aus reaktiven Epoxidharzen gleichmäßig von 150 bis 170 g/m² überzogen wird.

Eine weitere bedeutende Eigenschaft des Verfahrens gemäß Erfindung beruht darauf, dass die mit dem 1K-System überzogene und zwischen zwei kontinuierlichen Trennschichten untergebrachte verstärkende Schicht bei Temperaturen von 70 bis 170°C und im Zeitraum von 5 bis 15 Minuten getränkt wird.

Zu den wesentlichen Eigenschaften des Verfahrens gemäß Erfindung gehört auch die Tatsache, dass die mit dem 1K-System überzogene und zwischen zwei kontinuierlichen Trennschichten untergebrachte verstärkende Schicht bei Temperaturen von 70 bis 150°C und im Zeitraum von 5 bis 15 Minuten und unter Druckeinwirkung von 2 bis 5 bar getränkt wird.

Gemäß einer der Varianten des Verfahrens gemäß Erfindung wird die mit dem 1K-System überzogene und zwischen zwei kontinuierlichen Trennschichten untergebrachte verstärkende Schicht unter Druckeinwirkung in einer Presse getränkt.

Gemäß einer anderen Variante des Verfahrens gemäß Erfindung wird die mit dem 1K-System überzogene und zwischen zwei kontinuierlichen Trennschichten untergebrachte verstärkende Schicht unter Druckeinwirkung (Pressung) getränkt, die mit auf 90 bis 120°C erwärmten Kalandern erzeugt wird.

Die Anwendung der technischen Lösung gemäß Erfindung bringt zahlreiche und zugleich neue und verblüffend höherwertige technische Eigenschaften, von denen die wichtigste darauf beruht, dass das 1K-System gemäß Erfindung, darin die eingesetzten Harzsorten und die latenten Härter, bewirkt, dass der Vernetzungsprozess im 1K-System erst bei höheren Temperaturen, d.h. bei über 100°C anläuft. Die genannte Eigenschaft des 1K-Systemsgemäß Erfindung bewirkt ebenfalls, dass sowohl das 1K-System als auch Prepregs, die unter Einsatz des 1K-Systems hergestellt werden, nicht unbedingt bei niedrigen Temperaturen, sondern bei Raumtemperaturen und über eine vielmals längere Zeit hindurch, sogar über 12 Monate hinaus, gelagert werden können. In der Lagerzeit erhalten die hergestellten Prepregs die erforderliche Plastizität und Formbarkeit zur Herstellung von Erzeugnissen in beliebigen Formen, denn auch nach 12-monatiger Lagerung bei Raumtemperatur überschreitet der Fortschritt der Vernetzung 5% nicht.

Das 1K-Systemgemäß Erfindung, das bei Herstellung von Prepregs eingesetzt wird, erlaubt die Fertigung von Erzeugnissen mit hohen Beständigkeitseigenschaften bei wesentlich niedrigeren Materialkosten. Die Herabsetzung der Kosten beläuft sich auf ca. 40%.

Das Verfahren zur Herstellung von Prepregs nach technischen Lösungen gemäß Erfindung schließt auch den Einsatz von Löse- und Dispergiermittel aus, was sich ebenfalls in der vorgenannten Herabsetzung der Kosten widerspiegelt.

Weiterhin erfindungsgemäß ist ein Verfahren zum Verbinden von erfindungsgemäßen Halbzeugen. Bei diesem Verfahren werden in einem ersten Schritt a) die zu verbindenden Bereiche in Kontakt gebracht. Der Kontakt sollte dabei zumindest teilweise flächig sein.

Anschließend wird in einem Schritt b) Druck und Temperatur in den Verbindungsbereich eingebracht. Anschließend kühlt der Verbindungsbereich in einem Schritt c) ab.

So wird der Verbindungsbereich stoffschlüssig verbunden. Bei einer Erwärmung über Schmelztemperatur aber unter der Vernetzungstemperatur kann die Verbindung durch erneutes Erwärmen wieder gelöst werden. Dies kann zur Verbindung mehrerer Bauteile in überschneidenden Verbindungsbereichen vorteilhaft sein, da im Verbindungsbereich durch erneutes Erwärmen ein weiteres Halbzeug verbunden werden kann. So können komplexe Strukturen durch einen einfachen Verfahrensablauf hergestellt werden.

Bevorzugt werden die Verstärkungsgerüste der Halbzeuge im Verbindungsbereich zudem mechanisch verbunden. Dies kann beispielsweise formschlüssig oder kraftschlüssig, beispielsweise durch Umformung, Nähen oder Bolzenverbindung erfolgen.

Natürlich besteht auch die Möglichkeit in Schritt b) auf eine Temperatur über Vernetzungstemperatur zu erwärmen, wodurch der Verbindungsbereich konsolidiert.

Im erfindungsgemäßen 1K System gemäß dem nebengeordneten Anspruch 13 weist das Epoxidharz eine Erweichungstemperatur im Bereich von 50 bis 130 °C auf.

Anhand der aufgeführten Darstellungen und Ausführungsbeispiele soll die Erfindung näher erläutert werden ohne sie auf diese zu beschränken. Dabei zeigen:
Figur 1 den schichtartigen Aufbau von einem erfindungsgemäßen Prepreg,
Figur 2 das Prepreg nach Figur 1 nach der Imprägnierung.

### a) Herstellung eines 1K-Epoxidharzes

### Beispiel 1 - Referenzbeispiel:

Zur Herstellung eines 1K-Systems werden 98-Gew.-% BPA-Epoxidharz mit einem Epoxidwert von 0,26 mol/100g und einer Erweichungstemperatur von 55°C mit 2 Gew.-% 2-Methylimidazol bei Raumtemperatur in einem Doppelkonusmischer für 20 min. vermischt.

Eine Menge des 1K-Systems wurde zubereitet, indem 98 Gewichtsanteile von BPA-Epoxidharz (E2) mit einem Epoxidwert von 0,26 mol/100g und einer Erweichungstemperatur von 55°C mit 2 Gewichtsanteilen von 2-Methylimidazol (2MI) bei Raumtemperatur 20 Minuten lang in einem Doppelkonusmischer vermischt wurden. Das zubereitete Gemisch wurde in einer DSC Untersuchung gekennzeichnet, indem die Enthalpie des Vernetzungsprozesses ermittelt wurde, die ca. 180 J/g beträgt und der maximalen Vernetzungstemperatur, die ca. 85°C beträgt.

### Beispiel 2

Eine Menge des 1K-Systems gemäß Erfindung wurde zubereitet, indem 92 Gewichtsanteile von BPA-Epoxidharz (E1) mit einem Epoxidwert von 0,20 mol/100g und einer Erweichungstemperatur von 63°C mit 8 Gewichtsanteilen von latentem Härter auf Basis von 2-Methylimidazol mit einer allgemeinen Formel (Cu(2MI)₄Cl₂) bei einer Temperatur von 80°C 10 Minuten lang mit einem Ankerrührwerk vermischt wurden. Das hergestellte 1K-System wurde bandförmig geformt, bis auf 25°C abgekühlt und in einer Messermühle zerkleinert.

Das zubereitete Gemisch wurde in einer DSC Untersuchung gekennzeichnet, indem die Enthalpie des Vernetzungsprozesses ermittelt wurde, die ca. 260 J/g beträgt und der maximalen Vernetzungstemperatur, die ca. 150°C beträgt.

### b) Herstellung eines Prepregs

### Beispiel 1

Gemäß erstem Beispiel für die Umsetzung des Verfahrens zur Herstellung von mit dem 1K-System vorimprägnierten Produkten, genannt Prepregs, wird im ersten Schritt des Verfahrens die verstärkende Schicht 2 abmessungsmäßig vorbereitet, die ein Gewebe aus Kohlstofffasern mit einem Gewicht von 410 g/m² darstellt.

Die obere Fläche der verstärkenden Schicht 2 wird mit einem pulverisierten 1K-System überzogen, dabei ist das pulverisierte 1K-System als Schicht 3 mit einer gleichmäßigen Dichte von 170 g/m² aufgetragen.

So vorbereitete Schichten der Verstärkung und des 1K-Systemswerden in einer Presse auf einer kontinuierlichen Trennschicht aus nicht tränkbarem und nicht adhäsivem Stoff, am günstigsten in Form von einem Blatt Silikonpapier 1 untergebracht, danach wird die obere Schicht in Form von einem zweiten Blatt Silikonpapier 4 darauf gelegt.

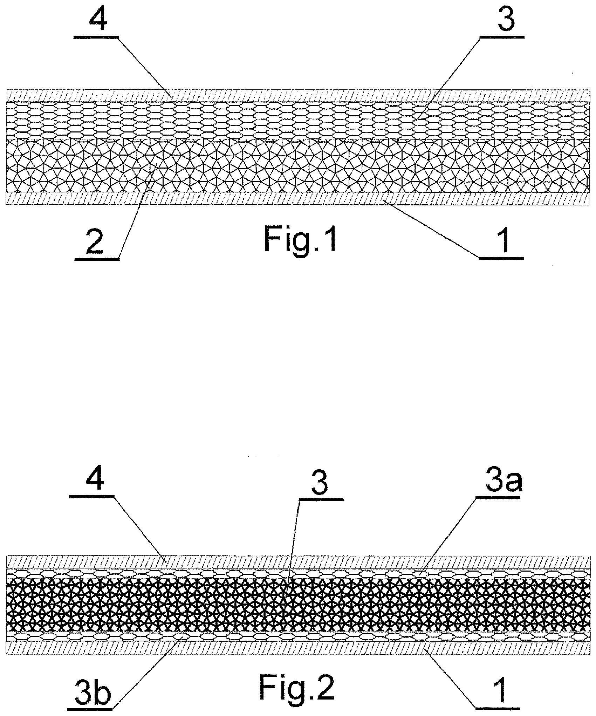

Die vorgeschriebene Anordnung der einzelnen Prepreg-Schichten ist an der Fig. 1 bildlich dargestellt, auf dem das Prepreg in einem Querschnitt zu sehen ist, wobei die Ebene senkrecht zu allen Schichten verläuft.

So vorbereiteter Stapel wird in einer Presse mit Heizplatten untergebracht und bis auf 80 °C erwärmt. In dieser Temperatur wird er 10 Minuten lang warm gehalten und dabei wird zugleich ein Druck von 2 bar auf den Stapel ausgeübt.

Nach Abschluss der Warm- und Druckphase kühlt sich das Prepreg selbständig ab. Die Anordnung der einzelnen Schichten nach Abkühlung ist auf der Fig. 2 in einem Querschnitt dargestellt.

Wie das auf der Fig. 2 dargestellt und aus der Zeichnung zu folgern ist, wandelt sich die 1K-System-Schicht 3 aus der Fig. 1 bei Warmhaltung und Druckeinwirkung auf das Prepreg von einem festen in einen halbflüssigen Zustand um und durchdringt und tränkt die verstärkende Schicht 2. Dabei bilden sich an beiden Seiten aus dem 1K-System die äußeren Schutzschichten 3a und 3b, die auf der Fig. 2 zu sehen sind.

Das auf diese Weise erzeugte Material für Prepregs besitzt Eigenschaften wie in der Tabelle 1 dargestellt.

**Tabelle 1**

| **Lagerzeit** | **Vernetzungsenthalpie** | **Änderung der Reaktivitätsfähigkeit (Enthalpiedifferenz)** | **Max. Vernetzungstemperatur** |
|---|---|---|---|
| **[Monat]** | **[J/g]** | **[%]** | **[°C]** |
| 0 | 120,6 | - | 88 |
| 1 | 118,3 | 1,9 | 90 |
| 2 | 117,8 | 2,3 | 91 |
| 3 | 117,2 | 2,8 | 91 |
| 6 | 114,9 | 4,7 | 93 |

### Beispiel 2

Gemäß zweitem Beispiel für Umsetzung des Verfahrens zur Herstellung von Prepregs wird im ersten Schritt dieses Beispiels eine verstärkende Schicht vorbereitet, die ein Gewebeband aus Basaltfasern mit einem Gewicht von 210g/m² darstellt.

Die obere Fläche der verstärkenden Schicht wird mit einem pulverisierten 1K-System überzogen, dabei ist das pulverisierte 1K-System als Schicht mit einer gleichmäßigen Dichte von 140g/m² aufgetragen.

So vorbereitete Schichten der Verstärkung und des 1K-Systems werden zwischen zwei bandförmigen Schichten aus Silikonpapier untergebracht, danach wird der Stapel in bis auf 90°C erwärmte Kalander eingebracht, wobei die Fördergeschwindigkeit der Bänder in den Kalandern 0,5 m/Minute beträgt.

Das hergestellte bandförmige Prepreg kühlt sich selbstständig ab und wird anschließend auf Rollen gewickelt.

Die innerhalb von 12 Monaten der Lagerzeit untersuchten Eigenschaften von Prepreg, das gemäß zweitem Beispiel für das Verfahren gemäß Erfindung hergestellt wurde, sind in der Tabelle 2 dargestellt.

**Tabelle 2**

| **Lagerzeit** | **Vernetzungsenthalpie** | **Änderung der Reaktivitätsfähigkeit (Enthalpiedifferenz)** | **Max. Vernetzungstemperatur** |
|---|---|---|---|
| **[Monat]** | **[J/g]** | **[%]** | **[°C]** |
| 0 | 200,2 | - | 162 |
| 1 | 199,3 | 0,5 | 162 |
| 2 | 198,7 | 0,7 | 163 |
| 3 | 198,1 | 1,0 | 163 |
| 6 | 197,3 | 1,4 | 164 |
| 12 | 192,8 | 4,0 | 167 |

### Beispiel 3:

Nachfolgendes Ausführungsbeispiel beschreibt die Herstellung einer Wanne aus einem Prepreg.
Der Prepreg besteht aus Glasfasergewebe mit Leinwandbindung. Die Lagendicke beträgt ca. 0,35mm. Es werden sechs Lagen übereinander in einem Werkzeug positioniert und in einem Infrarotheizfeld bei einer Temperatur von ca. 110 °C und einer Haltezeit von 30 s vorgewärmt. Anschließend wird der Lagenstapel in eine auf 120 °C temperierte Werkzeugform eingelegt, durch Schließen der Form umgeformt und bei einem Druck von 40 bar über einen Zeitraum von 10 min konsolidiert.

Nach dem Abkühlen wird die nun konsolidierte Wanne dem Werkzeug entnommen und gegebenenfalls die Kanten nachgearbeitet.

### Beispiel 4:

Nachfolgendes Ausführungsbeispiel beschreibt die Herstellung der Wanne aus Beispiel 3 unter Verwendung von Kohlenstofffasergewebe und dem erfindungsgemäßen 1K-System. Ausgangspunkt ist Kohlenfasergewebe in Köperbindung (2/2) mit einer Lagendicke von 0,56 mm und einem Flächengewicht von 400 g/m². Die einzelnen Zuschnitte für die Faserlagen haben eine Größe von 320 x 210 mm.
Zuerst wird auf eine Lage des Gewebes eine Menge von ca. 15 g pulverförmigen 1K-System aufgebracht und mit einem Spatel verteilt. Dann wird auf diese Lage eine weitere Lage aufgelegt und erneut 15g 1K-System auf dieser verteilt. Dies wird wiederholt bis vier Lagen übereinander positioniert sind, wobei zwischen den Lagen jeweils 15 g des 1K-Systems eingebracht sind.

Auf die Oberseite der letzten (vierten) Lage werden ebenfalls mit Spatel 25g des 1K-Systems verteilt. Vor dem Einlegen des Stapels in das Werkzeug werden im Werkzeug ebenfalls 25g 1K-System flächig verteilt, auf die der Stapel dann platziert wird. Anschließend wird das auf 120 °C temperierte Werkzeug geschlossen. Die Aushärtung erfolgt bei einem Druck 40 bar über einen Zeitraum von 10 min. Nach Abkühlung wird das Werkstück entnommen und gegebenenfalls nachbearbeitet.

### Bezugszeichenliste

- 1: Silikonpapier
- 2: Verstärkende Schicht/ Verstärkungsgebilde
- 3: 1K-System
- 3a: Äußere Schutzschicht des 1K-Systems
- 3b: Äußere Schutzschicht des 1K-Systems
- 4: Silikonpapier

## Patentansprüche

1. Faserverbundbauteil aufweisend ein 1K-System als Matrixwerkstoff, wobei das 1K-System aus einem Epoxidharz und einem sekundären Amin als Härter besteht und das sekundäre Amin ein Komplex der allgemeinen Formel MeL₄X₂ ist, wobei Me ein zweiwertiges Metallkation, ausgewählt aus Kupfer, Cobalt, Nickel und Zink, L ein Ligand, ausgewählt aus Imidazol und einem Imidazol-Derivat und X ein Anion, ausgewählt aus Fluorid, Chlorid, Bromid, lodid und Nitrat, ist.

2. Faserverbundbauteil nach Anspruch 1, **dadurch gekennzeichnet, dass** das Epoxidharz Bisphenol A-basierend ist und/oder einen Epoxidwert von 0,05 bis 0,28 mol/100 g aufweist.

3. Faserverbundbauteil nach Anspruch 1 oder 2, **dadurch gekennzeichnet, dass** das Epoxidharz eine Erweichungstemperatur im Bereich von 50 bis 130 °C aufweist.

4. Faserverbundbauteil einem der Ansprüche 1 bis 3, **dadurch gekennzeichnet, dass** das 1K-System 86 bis 99 Gew-% des Epoxidharzes, gemessen an der gesamten Masse des 1K-Systems enthält.

5. Faserverbundbauteil nach einem der Ansprüche 1 bis 4, **dadurch gekennzeichnet, dass** das Imidazol-Derivat ein Imidazol mit einem Alkylsubstituenten an mindestens einer der Positionen 2, 4 oder 5 des Imidazolmoleküls ist.

6. Faserverbundbauteil nach einem der Ansprüche 1 bis 5, **dadurch gekennzeichnet, dass** das 1K-System zu 1 bis 14 Gew.-% des Imidazols oder Imidazol-Derivates, gemessen an der gesamten Masse des 1K-Systems enthält.

7. Faserverbundbauteil nach einem der Ansprüche 1 bis 6, **dadurch gekennzeichnet, dass** das 1K-System eine Vernetzungstemperatur von über 100 °C aufweist.

8. Verwendung eines 1K-Systems wie in einem der Ansprüche 1 bis 7 definiert als Matrixwerkstoff für ein Faserverbundbauteil.

9. Verfahren zur Herstellung imprägnierter Halbzeuge für die Herstellung von duroplastischen Faserverbundbauteilen unter Verwendung eines 1K-Systems wie in einem der Ansprüche 1 bis 7 definiert, **gekennzeichnet durch** die folgenden Verfahrensschritte:
a) Aufbringen des pulverförmigen 1K-Systems auf ein textiles Verstärkungsgebilde;
b) Aufschmelzen des 1K-Systems durch Temperaturerhöhung bis zu einer Temperatur unterhalb der Vernetzungstemperatur;
c) Abkühlung des imprägnierten Halbzeuges.

10. Verfahren nach Anspruch 9, **dadurch gekennzeichnet, dass** der Auftrag des pulverförmigen 1K-Systems in Schritt a) mittels Sprühen oder Sieben erfolgt.

11. Verfahren nach einem der Ansprüche 9 oder 10, **dadurch gekennzeichnet, dass** der Auftrag des 1K-Systems ganzflächig oder lokal erfolgt und entweder direkt auf das Verstärkungsgebilde oder auf die Werkzeugform vor dem Einlegen des Verstärkungsgebildes erfolgt.

12. Verfahren nach einem der Ansprüche 9 bis 11, **dadurch gekennzeichnet, dass** das Verstärkungsgebilde aus mehreren Schichten besteht und der Auftrag des 1K-Systems auch zwischen den Schichten erfolgt.

13. 1K-System bestehend aus einem Epoxidharz, welches eine Erweichungstemperatur im Bereich von 50 bis 130 °C aufweist, und einem sekundären Amin als Härter, wobei das sekundäre Amin ein Komplex der allgemeinen Formel MeL₄X₂ ist, wobei Me ein zweiwertiges Metallkation, ausgewählt aus Kupfer, Cobalt, Nickel und Zink, L ein Ligand, ausgewählt aus Imidazol und einem Imidazol-Derivat und X ein Anion, ausgewählt aus Fluorid, Chlorid, Bromid, lodid und Nitrat, ist.

14. 1K-System nach Anspruch 13, **dadurch gekennzeichnet, dass** das Epoxidharz Bisphenol A-basierend ist und/oder einen Epoxidwert von 0,05 bis 0,28 mol/100 g aufweist.

15. 1K-System nach Anspruch 13 oder 14, **dadurch gekennzeichnet, dass** das 1K-System 86 bis 99 Gew-% des Epoxidharzes, gemessen an der gesamten Masse des 1K-Systems enthält.

16. 1K-System nach einem der Ansprüche 13 bis 15, **dadurch gekennzeichnet, dass** das Imidazol-Derivat ein Imidazol mit einem Alkylsubstituenten an mindestens einer der Positionen 2, 4 oder 5 des Imidazolmoleküls ist.

17. 1K-System nach einem der Ansprüche 13 bis 16, **dadurch gekennzeichnet, dass** das 1K-System zu 1 bis 14 Gew.-% des Imidazols oder Imidazol-Derivates, gemessen an der gesamten Masse des 1K-Systems enthält.

18. 1K-System nach einem der Ansprüche 13 bis 17, **dadurch gekennzeichnet, dass** das 1K-System eine Vernetzungstemperatur von über 100 °C aufweist.

19. Verwendung eines 1K-Systems nach einem der Ansprüche 13 bis 18 als Matrixwerkstoff für ein Faserverbundbauteil.

## Claims

1. Fiber-reinforced composite component comprising a 1C system as matrix material, wherein the 1C system is composed of an epoxy resin and a secondary amine as a curing agent, and the secondary amine is a complex of the general formula MeL₄X₂, wherein Me is a bivalent metal cation selected from copper, cobalt, nickel and zinc, L is a ligand selected from imidazole and an imidazole derivative, and X is an anion selected from fluoride, chloride, bromide, iodide and nitrate.

2. Fiber-reinforced composite component according to claim 1, **characterized in that** the epoxy resin is based on Bisphenol A and/or the epoxy resin has an epoxy value of 0.05 to 0.28 mol/100 g.

3. Fiber-reinforced composite component according to claim 1 or 2, **characterized in that** the epoxy resin has a softening temperature in the range of 50 to 130 °C.

4. Fiber-reinforced composite component according to one of the claims 1 to 3, **characterized in that** the 1C system includes 86 to 99% by weight of the epoxy resin, measured with regard to the total mass of the 1C system.

5. Fiber-reinforced composite component according to one of the claims 1 to 4, **characterized in that** the imidazole derivative is an imidazole with an alkyl substituent in at least one of the positions 2, 4 or 5 of the imidazole molecule.

6. Fiber-reinforced composite component according to one of the claims 1 to 5, **characterized in that** the 1C system includes 1 to 14% by weight of the imidazole or imidazole derivative, measured with regard to the total mass of the 1C system.

7. Fiber-reinforced composite component according to one of the claims 1 to 6, **characterized in that** the 1C system has a cross-linking temperature above 100 °C.

8. Use of a 1C system as defined in one of the claims 1 to 7 as a matrix material for a fiber-reinforced composite component.

9. Method for manufacturing impregnated semi-finished products for the production of duroplastic fiber-reinforced composite components using a 1C system as defined in one of the claims 1 to 7, **characterized by** the following process steps:
a) Application of the powdered 1C system to a textile reinforcement structure;
b) Melting the 1C system via an increase in temperature up to a temperature below the cross-linking temperature;
c) Cooling of the impregnated semi-finished product.

10. Method according to claim 9, **characterized in that** the powdered 1C system in step a) is applied via spraying or sieving.

11. Method according to claim 9 or 10, **characterized in that** the 1C system is applied over the entire area or locally and either directly onto the reinforcement structure or onto the mold before the insertion of the reinforcement structure.

12. Method according to one of the claims 9 to 11, **characterized in that** the reinforcement structure consists of several layers, and the 1C system is also applied between the layers.

13. 1C system composed of an epoxy resin, having a cross-linking temperature of 50 °C to 130 °C, and a secondary amine as a curing agent, and the secondary amine is a complex of the general formula MeL₄X₂, wherein Me is a bivalent metal cation selected from copper, cobalt, nickel and zinc, L is a ligand selected from imidazole and an imidazole derivative, and X is an anion selected from fluoride, chloride, bromide, iodide and nitrate.

14. 1C system according to claim 13, **characterized in that** the epoxy resin is based on Bisphenol A and/or the epoxy resin has an epoxy value of 0.05 to 0.28 mol/100 g.

15. 1C system according to claim 13 or 14, **characterized in that** the 1C system includes 86 to 99% by weight of the epoxy resin, measured with regard to the total mass of the 1C system.

16. 1C system according to one of the claims 13 to 15, **characterized in that** the imidazole derivative is an imidazole with an alkyl substituent in at least one of the positions 2, 4 or 5 of the imidazole molecule.

17. 1C system according to one of the claims 13 to 16, **characterized in that** the 1C system includes 1 to 14% by weight of the imidazole or imidazole derivative, measured with regard to the total mass of the 1C system.

18. 1C system according to one of the claims 13 to 17, **characterized in that** the 1C system has a cross-linking temperature above 100° C.

19. Use of a 1C system as defined in one of the claims 13 to 18 as a matrix material for a fiber-reinforced composite component.

## Revendications

1. Composant de matériau composite renforcé par des fibres présentant un système 1C comme matériau de matrice, dans lequel le système 1C est constitué d'une résine époxyde et d'une amine secondaire comme durcisseur et l'amine secondaire est un complexe de formule générale MeL₄X₂, où Me est un cation de métal bivalent choisi parmi le cuivre, le cobalt, le nickel et le zinc, L est un ligand choisi parmi un imidazole et un dérivé d'imidazole et X est un anion choisi parmi un fluorure, un chlorure, un bromure, un iodure et un nitrate.

2. Composant de matériau composite renforcé par des fibres selon la revendication 1, **caractérisé en ce que** la résine époxyde est à base de bisphénol A et/ou présente un valeur époxy de 0,05 à 0,28 mole/100 g.

3. Composant de matériau composite renforcé par des fibres selon la revendication 1 ou 2, **caractérisé en ce que** la résine époxyde présente une température de ramollissement dans la plage de 50 à 130 °C.

4. Composant de matériau composite renforcé par des fibres selon l'une quelconque des revendications 1 à 3, **caractérisé en ce que** le système 1C contient 86 à 99 % en poids de la réside époxyde mesurés sur la masse totale du système 1C.

5. Composant de matériau composite renforcé par des fibres selon l'une quelconque des revendication 1 à 4, **caractérisé en ce que** le dérivé d'imidazole est un imidazole avec un substituant alkyle dans au moins l'une des positions 2, 4 ou 5 de la molécule d'imidazole.

6. Composant de matériau composite renforcé par des fibres selon l'une quelconque des revendication 1 à 5, **caractérisé en ce que** le système 1C contient jusqu'à 1 à 14 % en poids de l'imidazole ou du dérivé d'imidazole mesurés sur la masse totale du système 1C.

7. Composant de matériau composite renforcé par des fibres selon l'une quelconque des revendication 1 à 6, **caractérisé en ce que** le système 1C présente une température de réticulation de plus de 100 °C.

8. Utilisation d'un système 1C tel que défini dans l'une quelconque des revendications 1 à 7 comme matériau de matrice pour un composant de matériau composite renforcé par des fibres.

9. Procédé de fabrication de semi-produits imprégnés pour la fabrication de composants de matériau composite renforcé par des fibres duroplastiques en utilisant un système 1C tel que défini dans l'une quelconque des revendications 1 à 7, **caractérisé par** les étapes de procédé suivantes :
a) application du système 1C pulvérulent sur un produit de renfort textile ;
b) fusion du système 1C par augmentation de la température jusqu'à une température inférieure à la température de réticulation ;
c) refroidissement du semi-produit imprégné.

10. Procédé selon la revendication 9, **caractérisé en ce que** l'application du système 1C pulvérulent à l'étape a) se fait par pulvérisation ou tamisage.

11. Procédé selon l'une quelconque des revendications 9 ou 10, **caractérisé en ce que** l'application du système 1C se fait sur toute la surface ou localement et se fait directement sur le produit de renfort ou sur le moule avant l'introduction du produit de renfort.

12. Procédé selon l'une quelconque des revendications 9 à 11, **caractérisé en ce que** le produit de renfort est constitué de plusieurs couches et l'application du système 1C se fait également entre les couches.

13. Système 1C constitué d'une résine époxyde qui présente une température de ramollissement dans la plage de 50 à 130 °C et d'une amine secondaire comme durcisseur, dans lequel l'amine secondaire est un complexe de formule générale MeL₄X₂, où Me est un cation de métal bivalent choisi parmi le cuivre, le cobalt, le nickel et le zinc, L est un ligand choisi parmi un imidazole et un dérivé d'imidazole et X est un anion choisi parmi un fluorure, un chlorure, un bromure, un iodure et un nitrate.

14. Système 1C selon la revendication 13, **caractérisé en ce que** la résine époxyde est à base de bisphénol A et/ou présente une valeur époxy de 0,05 à 0,28 mole/100 g.

15. Système 1C selon la revendication 13 ou 14, **caractérisé en ce que** le système 1C contient 86 à 99 % en poids de la résine époxyde mesurés sur la masse totale du système 1C.

16. Système 1C selon l'une quelconque des revendications 13 à 15, **caractérisé en ce que** le dérivé d'imidazole est un imidazole avec un substituant alkyle dans au moins l'une des positions 2, 4 ou 5 de la molécule d'imidazole.

17. Système 1C selon l'une quelconque des revendications 13 à 16, **caractérisé en ce que** le système 1C contient jusqu'à 1 à 14 % en poids de l'imidazole ou du dérivé d'imidazole mesurés sur la masse totale du système 1C.

18. Système 1C selon l'une quelconque des revendications 13 à 17, **caractérisé en ce que** le système 1C présente une température de réticulation de plus de 100 °C.

19. Utilisation d'un système 1C selon l'une quelconque des revendications 13 à 18 comme matériau de matrice pour un composant de matériau composite renforcé par des fibres.
